# EUROPÄISCHE PATENTANMELDUNG

(11) **EP 3 955 068 A1**
(43) Veröffentlichungstag der Anmeldung: **16.02.2022**
(21) Anmeldenummer: 20190964.5
(22) Anmeldetag: 13.08.2020
(51) Int. Cl.: G05B 19/042, G05B 19/418

(54) **VERFAHREN UND SYSTEM ZUR PROJEKTIERUNG EINER LEITTECHNIK EINER VERFAHRENSTECHNISCHEN ANLAGE**

(71) Anmelder: Siemens Aktiengesellschaft, 80333 München (DE)
(72) Erfinder: Wendelberger, Klaus, 68789 St. Leon-Rot (DE)

(57) **Zusammenfassung**

Die Erfindung betrifft ein Verfahren und System zur Projektierung einer Leittechnik einer verfahrenstechnischen Anlage, deren verfahrenstechnischen Komponenten mittels einer Leittechnik betrieben werden, indem eine Automatisierungssoftware Stellorgane der Komponenten gemäß eines vorgegebenen Betriebsverhaltens steuert oder regelt, wobei das Betriebsverhalten der Komponenten während der Projektierung anhand von Logiken festgelegt wird. Das verfahren ist dadurch gekennzeichnet, dass zunächst eine natürliche Sprache, in der das zu realisierende Betriebsverhalten vorgegeben wird, formalisiert wird, indem Begrifflichkeiten und eine Syntax definiert werden, dass basierend auf der formalisierten Sprache das zu realisierende Betriebsverhalten in einen natürlichsprachlichen Funktionsplan, der die logische Bedeutung der formalisierten Sprache in einer funktionalen Darstellung visualisiert, erfasst wird, und dass mittels des natürlichsprachlichen Funktionsplans die Automatisierungssoftware für die zu projektierende Anlage erstellt wird. Auf diese Art und Weise kann eine Leittechnik einer technischen Anlage effizient, direkt aus den Vorgaben der Anlagenplanung erstellt werden.

## Beschreibung

Die Erfindung betrifft ein Verfahren und System zur Projektierung einer Leittechnik einer verfahrenstechnischen Anlage, deren verfahrenstechnischen Komponenten mittels der Leittechnik betrieben werden, indem eine Automatisierungssoftware Stellorgane der Komponenten gemäß eines vorgegebenen Betriebsverhaltens steuert oder regelt. Die Erfindung betrifft ferner ein entsprechendes Computerprogrammprodukt.

Bei der Planung einer verfahrenstechnischen Anlage legt ein Anlageningenieur den Aufbau einer technischen Anlage fest.

Bei der technischen Anlage kann es sich um eine Anlage der Prozessindustrie handeln z.B. in den Branchen der chemischen, pharmazeutischen, petrochemischen oder der Nahrungs- und Genussmittelindustrie. Auch Anlagen der Öl- oder Gasindustrie oder der Energieerzeugung sind umfasst, ebenso wie Anlagen der Fertigungsindustrie. Solch technische Anlagen werden mittels eines Automatisierungssystems gesteuert und überwacht. Die Automatisierungstechnik ertüchtigt die Verfahrenstechnik zum bestimmungsgemäßen Betrieb der technischen Anlage.

Bei den verfahrenstechnischen Komponenten der technischen Anlage handelt es sich um Behälter, Pumpen, Ventile, Wärmetauscher und ihre Verbindung miteinander, insbesondere Rohrleitungen. Der Anlageningenieur gibt bei der Planung vor, wie diese Anlage im Automatikbetrieb zu betreiben ist. Hierzu gehört die Definition von logischen Funktionen auf Basis logischer Verknüpfungen. Im Allgemeinen werden unter logischen Verknüpfungen die Operationen der Boolschen Algebra verstanden wie UND, ODER, Verneinungen oder andere Operatoren, wie z.B. Speicher- oder Zeitglieder. In der Prozessautomatisierung bilden logische Verknüpfungen einen wesentlichen Anteil der Automatisierungsaufgaben als Verriegelungslogiken wie Freigabe, Schutz und automatische Betätigung von verfahrenstechnischen Komponenten. Typische Verriegelungsfunktionen sind das Stoppen einer Pumpe bei geschlossenem Ventil oder das Verhindern des Startens eines Rührers, wenn der Mindestfüllstand nicht erreicht ist. Weitere Gründe für Verriegelungen können z. B. zu hohe Temperaturen oder Drucke sein. Die Verriegelungslogiken werden durch das Automatisierungssystem realisiert. Derartige Logiken legen fest, wann bestimmte Stellorgane vom Automatisierungssystem ein- oder ausgeschaltet bzw. auf- oder zugefahren werden müssen bzw. dürfen. Beispiele für bei der Anlagenplanung vorgegebene Verriegelungslogiken sind:
"Der Motor A darf nur eingeschaltet werden, wenn der Druck B größer als x bar und das Ventil C geschlossen ist." oder "Das Ventil C muss nach spätestens 1 Minute geschlossen werden, wenn die Temperatur D seit 10 Minuten zu groß oder der Motor A nicht eingeschaltet ist."

Im Rahmen der Projektierung der Leittechnik einer technischen Anlage muss ein Leittechnikingenieur u.a. entsprechend der Vorgaben der Verriegelungslogiken die Automatisierungssoftware für das Automatisierungssystem aufbauen. In modernen Prozessleitsystemen erfolgt die Umsetzung dadurch, dass Funktionspläne von Steuerungen und Regelungen erstellt werden, welche die von dem Anlageningenieur vorgegebenen Logiken umsetzen.

Der Anlageningenieur hat verschiedene Möglichkeiten, die Vorgaben für die zu realisierenden Logiken zu erstellen. Eine Möglichkeit besteht darin, die Logiken in einem Textdokument unter Verwendung der natürlichen Sprache zu formulieren. Alternativ können die Vorgaben in Tabellenform durch Darstellung entsprechender Wenn-Dann-Beziehungen festgehalten werden.

Vorteilhaft ist zunächst die Vorgabe in natürlicher Sprache. Denn in diesem Falle können die Anforderungen aus prozesstechnischer Sicht formuliert werden, ohne dass Kenntnis darüber benötigt wird, wie derartige Anforderungen in einem Automatisierungssystem umzusetzen sind. Hierbei ist zu beachten, dass ein Anlageningenieur, der für die Planung einer verfahrenstechnischen Anlage zuständig ist, in der Regel nicht gleichzeitig mit den Funktionsdarstellungen eines Automatisierungssystems vertraut ist.

Der Leittechnikingenieur muss dann die natürlichsprachlichen Vorgaben verstehen und in Funktionspläne des Automatisierungssystems umsetzen. In gemeinsamen Systemgesprächen muss hinterher geprüft werden, ob die vom Leittechnikingenieur erstellten Funktionspläne tatsächlich die Vorgaben des Anlageningenieurs erfüllen.

Es wäre daher vorteilhaft ein System zu haben, das bei Eingabe bestimmter Vorgaben des Anlageningenieurs in natürlicher Sprache automatisiert einen technischen Funktionsplan eines Automatisierungssystems oder direkt die Software des Automatisierungssystems ausgibt, ohne dass der Leittechnikingenieur die Logiken mühsam abgleichen muss. Das System sollte sicherstellen, dass die Vorgaben des Anlageningenieurs auch bei umfangreicheren Logiken übersichtlich und verständlich dargestellt werden können. Unter einem technischen Funktionsplan wird eine grafische Darstellung in der Art der Funktionsbausteinsprache der in den Normen EN 61131-3 (IEC 61131-3) definierten Sprachen zur Programmierung von Speicherprogrammierbaren Steuerungen (SPS) verstanden. Ein solcher technischer Funktionsplan besteht aus grafischen Elementen wie Verbindungen, Linien und Funktionsbausteinen.

Ein System, bei dem Software für ein Automatisierungssystem aus Vorgaben, die in natürlicher Sprache erstellt werden, generiert werden kann, ist aus der WO 2016/207886 A2 bekannt. Bei dem System kann ein Anwender Verriegelungslogiken in natürlicher Sprache dadurch formulieren, dass er unter Verwendung entsprechender Drop Down Menüs entsprechende verbale Sätze zusammenbaut. Die in natürlicher Sprache formulierten Logikvorgaben müssen dabei einer formalen Grammatik folgen. Gleichzeitig wird dem Anwender eine Vielzahl von verbalen Ausdrücken und Formulierungsmöglichkeiten zur Verfügung gestellt. Die Methode umfasst die Definition mehrerer Knoten, das Hinzufügen von Attributen zu jedem Knoten von mehreren Knoten und den Aufbau mehrerer Sätze. Jeder Satz von mehreren Sätzen ist für die Verknüpfung von Attribut zu Attribut mit einem anderen Attribut bestimmt. Die Begriffe des Satzes werden aus einer Gruppe ausgewählt, die aus mehreren Knoten, Attributen, natürlichsprachlichen Wörtern und deren Kombination besteht. Jeder Satz aus mehreren Sätzen wird von einem Prozessor bearbeitet, um den Syntaxregeln des neutralen Kontrollmodells zu entsprechen. Mehrere logische Sätze werden in einen Steuerungscode umgewandelt.

Bei dem aus dem Stand der Technik bekannten System können sehr umfangreiche Logiken, bei denen viele Eingangssignale verarbeitet werden müssen, nicht mehr übersichtlich dargestellt werden. Ein sehr langer Satz in natürlicher Sprache mit vielen logischen Bedingungen kann nicht mehr überblickt und auf Korrektheit überprüft werden.

Der Erfindung liegt die Aufgabe zugrunde, ein neuartiges, effizientes Verfahren und ein entsprechendes System zur Projektierung einer Leittechnik anzugeben, welches auch einem Anlageningenieur erlaubt, auf einfache Art und Weise Automatisierungssoftware zu erzeugen.

Diese Aufgabe wird durch die Merkmale des unabhängigen Patentanspruchs 1 gelöst Die Aufgabe wird ferner durch ein entsprechendes System gemäß Anspruch 10, ein Computerprogramm gemäß Anspruch 11 und ein Computerprogrammprodukt gemäß Anspruch 12 gelöst.

Das erfindungsgemäße Verfahren zur Projektierung einer Leittechnik einer verfahrenstechnischen Anlage, deren verfahrenstechnischen Komponenten mittels der Leittechnik betrieben werden, indem eine Automatisierungssoftware Stellorgane der Komponenten gemäß eines vorgegebenen Betriebsverhaltens steuert oder regelt, wobei das Betriebsverhalten der Komponenten während der Projektierung anhand von Logiken festgelegt wird, ist dadurch gekennzeichnet, dass zunächst eine natürliche Sprache, in der das zu realisierende Betriebsverhalten vorgegeben wird, formalisiert wird, indem Begrifflichkeiten und eine Syntax definiert werden. Basierend auf der formalisierten Sprache wird das zu realisierende Betriebsverhalten in einen natürlichsprachlichen Funktionsplan, der die logische Bedeutung der formalisierten Sprache in einer funktionalen Darstellung visualisiert, erfasst, und mittels des natürlichsprachlichen Funktionsplans wird die Automatisierungssoftware für die zu projektierende Anlage erstellt.

Mittels des erfindungsgemäßen Verfahrens zur Projektierung einer Leittechnik einer technischen Anlage wird das Engineering einer Anlage, also die Anlagenplanung, auf eine höhere Ebene gehoben. Ein Anlageningenieur kann nun die Automatisierungssoftware einer Leittechnik unmittelbar auf der Grundlage von in natürlicher Sprache vorgegebenen Anforderungen an das Betriebsverhalten der technischen Anlage erstellen. Dazu kommt ein systemneutraler, natürlichsprachlicher Funktionsplan zum Einsatz. Dieser wiederum basiert auf Begrifflichkeiten und einer Syntax, die sprachlichen Logikvorgaben folgt. Der natürlichsprachliche Funktionsplan erlaubt ebenso wie bei der IEC-Norm 61131-3 eine graphische Projektierung einer Leittechnik. Mittels eines Editors kann ein Nutzer den natürlichsprachlichen Funktionsplan bearbeiten und seine Anforderungen an die Anlagenlogik eintragen.

Das erfindungsgemäße Verfahren bietet zahlreiche Vorteile. Die Projektierung einer technischen Anlage wird effizienter und einfacher, was eine Zeit- und Kostenersparnis mit sich bringt. Der natürlichsprachliche Funktionsplan stellt eine systemneutrale, funktionale Darstellung dar, bei der zu einem Zeitpunkt der Anlagenplanung, zu dem in der Regel noch nicht bekannt ist, mit welchem konkreten Automatisierungssystem oder Leitsystem die Anlage später betrieben wird, bereits eine eindeutige Abbildung der Prozessverknüpfung auf die logischen Verknüpfungen der verfahrenstechnischen Komponenten erreicht werden kann. Aus dem natürlichsprachlichen Funktionsplan können sprachliche Logikbeschreibungen automatisch generiert werden. Zusätzlich erlaubt die übersichtliche Darstellung der natürlichsprachlichen Funktionspläne eine einfache Änderung und Optimierung der geforderten Logiken.

Vorteile und Ausgestaltungen der Erfindung, die einzeln oder in Kombination miteinander einsetzbar sind, sind Gegenstand der Unteransprüche.

In einer besonders vorteilhaften Ausführungsvariante weist die Syntax eine Kernlogik auf, die aus einer beliebig langen Kette aus logischen Auswertungen eines Eingangssignals einer Komponente und logischen Verknüpfungen bestehen, wobei optional Teile der Kette in Klammern zur Priorisierung gefasst werden können. Die Kernlogik stellt demnach eine Art Basislogik dar, die sich vorteilhat auf jegliche Logik, die innerhalb einer technischen Anlage eingesetzt wird, anwenden lässt. Die Kernlogik ist ferner wesentlicher Bestandteil des natürlichsprachlichen Funktionsplans. Sie ist vielfach einsetzbar, kombinierbar und erlaubt die Abbildung jeglicher Steuerungsaufgaben in allgemeinster Form.

In einer weiteren vorteilhaften Ausführungsvariante wird der natürlichsprachliche Funktionsplan erstellt, indem die in der Syntax enthaltenen Begrifflichkeiten Funktionsblöcken zugewiesen werden und die Funktionsblöcke in einer Matrixform angeordnet werden, wobei die Art der Anordnung einer Priorisierung innerhalb der Logik entspricht. Der natürlichsprachliche Funktionsplan kann demnach sehr einfach erstellt werden. Die Matrixform bietet ferner eine gute Übersichtlichkeit über die geforderten Logiken. Die Übersichtlichkeit wiederum macht die Erstellung Automatisierungssoftware für die Leittechnik effizient.

Der natürlichsprachliche Funktionsplan kann ferner vorteilhaft mit logischen Funktionsblöcken ergänzt werden, die nicht aus den zuvor zugewiesenen Begrifflichkeiten bestehen. Beispiele für derartige Funktionsblöcke sind Speicherglieder wie z.B. Flip Flop, Zähler, Transistoren o.ä. Dies erlaubt eine hohe Flexibilität bei der Erstellung der Automatisierungssoftware für die Leittechnik.

In einer besonders vorteilhaften Ausführungsvariante umfasst der natürlichsprachliche Funktionsplan in Form von Regelsätzen formulierte Algorithmen, die sicherstellen, dass die dargestellte Logik der vorgegebenen Syntax entspricht, dass ein Ausdruck in natürlicher Sprache automatisch erstellt werden kann und dass ein technischer Funktionsplan oder direkt die Automatisierungssoftware eines Automatisierungssystems automatisch generiert werden kann. Bei den Algorithmen handelt es sich um Platzierungsregeln, Verbindungsregeln, Klammerregeln und Umsetzungsregeln. Die Algorithmen laufen automatisiert im Hintergrund ab und enthalten das Regelwerk, innerhalb dessen sich ein Nutzer des natürlichsprachlichen Funktionsplans bewegen kann.

In einer weiteren vorteilhaften Ausführungsvariante wird mittels des natürlichsprachlichen Funktionsplans eine sprachliche Anweisung in Form eines Satzes generiert, der eine Logik wie z.B. eine Verriegelungslogik beschreibt. Diese Anweisung kann beispielsweise in der Nähe des natürlichsprachlichen Funktionsplans in dem Editor auf einem Bildschirm angezeigt werden. Dies bietet den Vorteil, dass ein Anlageningenieur bei Änderungen am natürlichsprachlichen Funktionsplan sofort erkennt, welche Auswirkungen die Änderungen auf die zu erstellende Logik hat. Auf diese Weise erfüllt die sprachliche Anweisung vorteilhaft eine Kontrollfunktion.

Anhand des natürlichsprachlichen Funktionsplans oder aus der sprachlichen Anweisung kann ein technischer Funktionsplan zur Definition von Logiken der Automatisierungstechnik erstellt werden, aus dem wiederum die Automatisierungssoftware für die zu projektierende Anlage erzeugt wird. Alternativ kann auch anhand des natürlichsprachlichen Funktionsplans oder aus der sprachlichen Anweisung unter Umgehung des technischen Funktionsplans direkt die Automatisierungssoftware für die zu projektierende Anlage erzeugt werden. Das Endziel ist jedoch zumeist die Erstellung eines technischen Funktionsplans für das Automatisierungssystem, mit dem beispielsweise eine Verriegelungslogik realisiert werden soll. Die Blöcke in der Funktionsblockmatrix des natürlichsprachlichen Funktionsplans können aufgrund der überwiegend auf logischen Verknüpfungen basierenden Syntax direkt in den technischen Funktionsplan übertragen werden. Am Eingang erzeugt ein Kennzeichen zusammen mit einem Zustand ein Rückführungssignal eines Antriebs oder ein binäres oder analoges Signal eines Sensors, welches als Eingangssignal verfügbar sein soll. Dieses Eingangssignal ist mit der Negations- oder Zeitbedingung der entsprechenden Kennzeichen-Auswertung (falls vorhanden) oder mit einem Element in der Funktionsblockmatrix verbunden. Im Falle eines analogen Eingangssignals muss noch eine Umwandlung in ein Binärsignal, z.B. durch Grenzwertbildung erfolgen.

In einer besonders vorteilhaften Ausführungsvariante kann ein Anlagenplaner die sprachliche Anweisung in Form eines Satzes, welcher normalerweise mittels des natürlichsprachlichen Funktionsplans erzeugt wird, über ein Mikrophon in ein Computersystem eingeben, welches daraus dann umgekehrt einen natürlichsprachlichen Funktionsplan erstellt. Der natürlichsprachliche Funktionsplan stellt die eingegebene Logik dann grafisch übersichtlich da, wodurch eine Kontrollfunktion erfüllt wird, und bietet die Möglichkeit, die Automatisierungssoftware des Automatisierungssystems daraus automatisch zu erzeugen. Diese Art der Projektierung einer Leittechnik ist besonders einfach zu handhaben und sehr effizient, da sozusagen "online" aus den Anforderungen an die Verfahrenstechnik Leittechnik (d.h. Automatisierungssoftware) erzeugt wird.

Das erfindungsgemäße Verfahren wird bevorzugt in Software oder in einer Kombination aus Soft-/Hardware implementiert, so dass die Erfindung auch ein Computerprogramm mit durch einen Computer ausführbaren Programmcodeanweisungen zur Implementierung des Verfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann beispielsweise in einem Speicher eines Servers vorgehalten oder in diesen geladen werden, so dass es automatisch durchgeführt wird, oder das Computerprogramm kann bei einer Cloud-basierten Lösung in einem Speicher eines Remote-Service-Rechners vorgehalten oder in diesen ladbar sein.

Im Folgenden wird die Erfindung anhand der in den Figuren dargestellten Ausführungsbeispiele näher beschrieben und erläutert. Dabei zeigen
- Fig. 1: ein Syntaxdiagramm für eine Verriegelungslogik
- Fig. 2: ein Syntaxdiagramm für eine Kernlogik, die eine sprachliche Definition einer beliebigen Verriegelungslogik erlaubt
- Fig. 3: ein Beispiel für eine Verriegelungslogik
- Fig. 4: ein Ausführungsbeispiel eines natürlichsprachlichen Funktionsplans gemäß der Erfindung

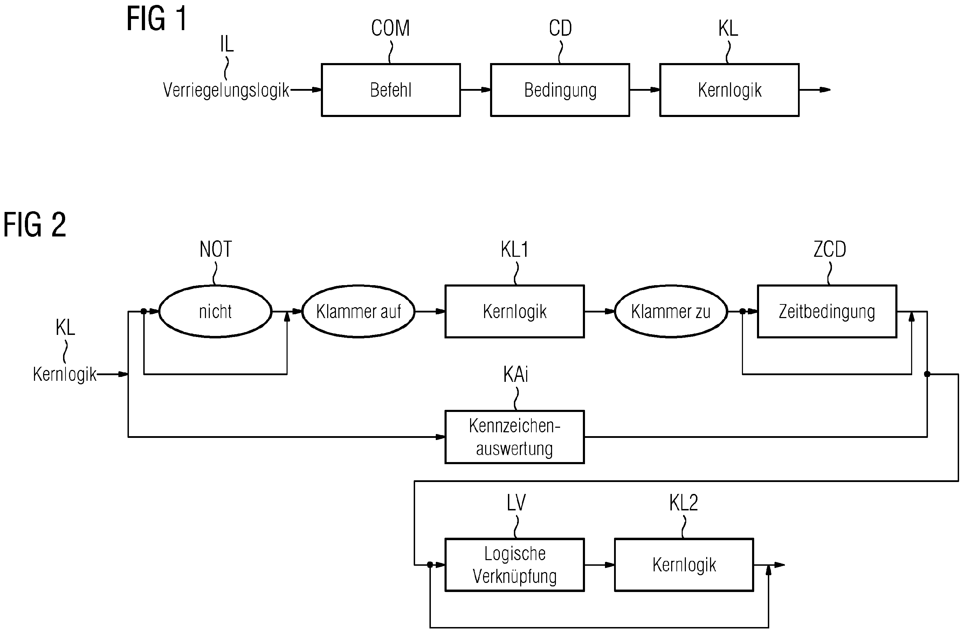

Die Figuren 1 und 2 zeigen zwei Ausführungen von Syntaxdiagrammen. Die Syntaxdiagramme bilden die Basis für das erfindungsgemäße Verfahren zur Projektierung einer Leittechnik.

Erfindungsgemäß wird zunächst die natürliche Sprache, in der das zu realisierende Betriebsverhalten vorgegeben wird, formalisiert, indem Begrifflichkeiten und eine Syntax definiert werden.

In diesem Ausführungsbeispiel sollen die Verriegelungslogiken einer technischen Anlage projektiert werden. Erfindungsgemäß werden daher zunächst Begrifflichkeiten definiert, die bei der verbalen Formulierung von Verriegelungslogiken verwendet werden. Außerdem wird eine Syntax definiert. Dabei werden - wie in einer natürlichen Sprache - die Zusammenfügungsregeln der Begrifflichkeiten, definiert, denen verbale Logikvorgaben folgen. Diese Definitionen schränken den Anwender nicht ein bzgl. der möglichen Logiken, die definiert werden können, standardisieren und formalisieren jedoch die Sprache. Zum Beispiel hat der Anwender nicht die Möglichkeit die Vorgabe für die Verriegelungslogik als natürliche Sprache zu formulieren, wie:
**Wenn der Druck mit dem Kennzeichen X größer als Y bar ist, muss die Pumpe Z auf Ein gehen.**
Stattdessen wird eine formalisierte Sprache gewählt:
**Befehl Pumpe Z ein wenn Druck X größer als Y bar**

Wie bereits erwähnt, ist die Syntax eine wesentliche Voraussetzung dafür, um die gewünschten logischen Verknüpfungen für das zu realisierende Betriebsverhalten der Komponenten einer verfahrenstechnischen Anlage zu erstellen. Zwei Beispiele der der Erfindung zu Grunde liegenden Syntax sind in den Figuren 1 und 2 gezeigt.

Unter dem Begriff *"Syntax"* wird im Allgemeinen ein Regelsystem zur Kombination elementarer Zeichen zu zusammengesetzten Zeichen in natürlichen oder künstlichen Zeichensystemen verstanden. In der Sprachwissenschaft versteht man unter dem Begriff *"Syntax"* die Satzlehre, ein Teilgebiet der Grammatik natürlicher Sprachen, das die Zusammenfügung von Wörtern bzw. Wortgruppen zu einem Satz auf Basis grammatikalischer Gesetzmäßigkeiten (etwa einer bestimmten vorgeschriebenen Satzstellung) behandelt bzw. den Sätzen zugrunde liegende regelmäßige Muster (Satzstruktur) beschreibt. Der Ausdruck *"Syntax"* wird sowohl für natürliche als auch für formale Sprachen verwendet.

Figur 1 zeigt beispielhaft ein Syntaxdiagramm für die Definition einer Verriegelungslogik IL in sprachlicher Form. Es werden statt Wörtern oder Zeichen vordefinierte Textblöcke verwendet, die entweder eine feste Bedeutung haben oder hinter denen sich wiederum eigne Syntax-Definitionen verbergen. In Ergänzung zu den Textblöcken können auch Kennzeichen (engl. Tags) von Prozesselementen (Sensoren, Antriebe, beliebige verfahrenstechnische Komponenten) bei der Definition der sprachlichen Verriegelungslogiken verwendet werden. Basierend auf dieser Syntax können die Anforderungen an ein System, das die sprachliche Definition von Verriegelungen erlaubt, spezifiziert werden.

Das Beispiel aus Fig. 1 beginnt mit dem Textblock "Befehl" COM. Dieser Textblock kann in einem "Untersyntax-Diagramm" näher spezifiziert werden:
"Befehl <Kennzeichen> ein" oder
"Befehl <Kennzeichen> Schutz auf" oder
"Befehl <Kennzeichen> Freigabe aus",
wobei <Kennzeichen> das Kennzeichen eines Prozesselements bezeichnet. "Befehle" COM werden mit "Zuständen" wie "auf", "zu", "ein" oder "aus" kombiniert.

Der zweite Textblock enthält eine "Bedingung" CD wie "Wenn", "Wenn nicht" ggfs. mit einer Zeitbedingung "seit 10 Sekunden", "für 10 Sekunden" oder "nach 10 Sekunden".

Der dritte Textblock enthält eine so genannte Kernlogik KL. Diese ist in Fig. 2 näher erläutert.

Das in Fig. 2 gezeigte Syntaxdiagramm sagt letztlich aus, dass die Kernlogik einer Verriegelungslogik, wie sie während der Anlagenplanung vorgegeben wird, aus einer beliebig langen Kette aus Kennzeichenauswertungen KAi (i = 1,2,3,...) und logischen Verknüpfungen LV wie UND oder ODER besteht. Eine Kennzeichenauswertung KAi ist dabei die logische Auswertung eines Eingangssignals des Automatisierungssystems. Sie enthält demnach das Kennzeichen des Prozesselements, aus dem das Signal stammt, ggfs. eine Negation, einen Zustand/Vergleich und ggfs. eine Zeitbedingung. Beispiele für Kennzeichenauswertungen sind:
**Motor A aus**
**Ventil B nicht zu seit 10 Sekunden**
**Druck C nicht größer als 10 bar vor 10 oder mehr Minuten Temperatur D kleiner oder gleich 100°C.**
Das Syntaxdiagramm aus Fig. 2 ist daher so zu lesen: der Eingangspfeil signalisiert das Eingangssignal. Die Auswertungen dieses Signals können entweder - wenn man dem oberen Pfad folgt - durch Festlegung von Klammerebenen in eine Prioritätsreihenfolge gebracht werden oder es wird eine nicht weiter priorisierte Auswertung hinzugefügt (unterer Pfad). Im oberen Pfad sind die Negation und die Zeitbedingung fakultativ, was durch den Pfeil, der unterhalb des Elements vorbeigeführt wird, angedeutet ist. Vor dem Textblock "Logische Verknüpfung" LV treffen die beiden Pfade wieder zusammen. An die "Logische Verknüpfung" LV schließt sich entweder eine weitere Kernlogik KL2 an, oder die "Gesamtkernlogik" KL ist bereits vor dem Textblock LV abgeschlossen.

Teilterme innerhalb einer Kernlogik KL können in Klammern gefasst werden, damit sie mit höherer Priorität ausgeführt werden. Dabei kann es beliebig viele Hierarchieebenen von Klammern geben. Vor einer Klammer kann eine Negation NOT und nach einer Klammer kann eine Zeitbedingung ZCD bestehen.

Die Kernlogik einer Logikvorgabe kann demnach folgendermaßen lauten:
**KA1 und KA2 oder (KA3 oder nicht (KA4 oder KA5) seit 10 Sekunden) und nicht (KA6 oder KA7)**

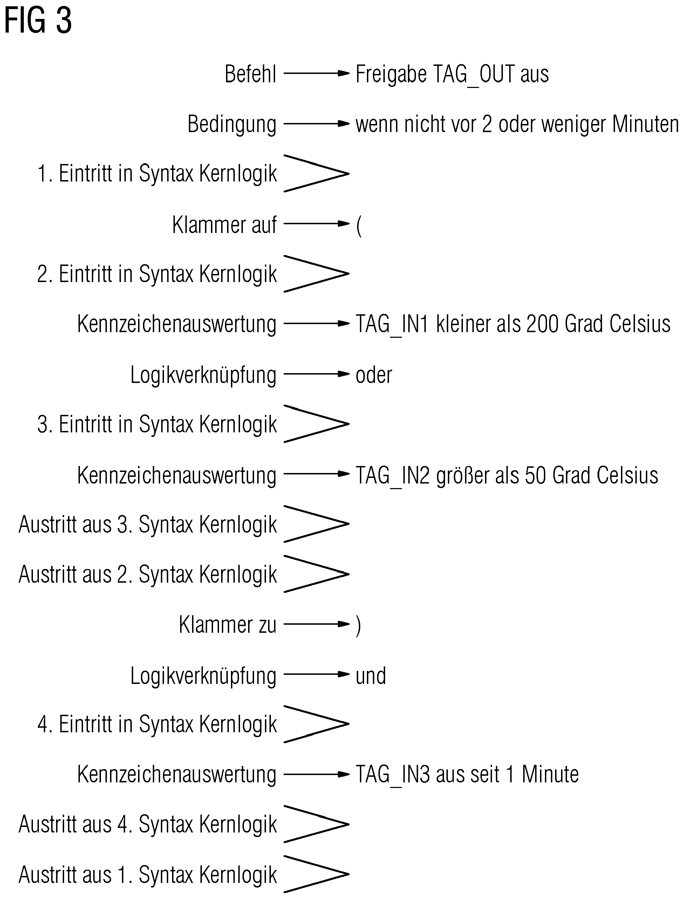

In Fig. 3 ist ein Beispiel einer Definition einer sprachlichen Verriegelungslogik IL und ihrer Interpretation in Übereinstimmung mit der in den Figuren 1 und 2 definierten Syntax angegeben. Ausgangspunkt für das Beispiel ist die folgende Anforderung an die Verriegelungslogik in natürlicher Sprache:
**Die Anlagenkomponente TAG_OUT darf nicht ausgeschaltet werden, wenn es innerhalb der letzten zwei Minuten vorgekommen ist, dass entweder die Temperatur TAG_IN1 unterhalb 200°C lag oder die Temperatur TAG_IN2 oberhalb 50°C lag, während gleichzeitig die Anlagenkomponente** TAG_IN3 **für mindestens eine Minute stillgestanden ist.**

Mittels des Syntaxdiagramms aus Fig. 1 wird der Befehl COM "Befehl Freigabe TAG_OUT aus" definiert. Es folgt gemäß dem Syntaxdiagramm aus Fig. 1 eine Bedingung CD "wenn nicht vor 2 oder weniger Minuten", dann folgt eine Kernlogik KL. Nun folgen die Syntaxregeln gemäß Syntaxdiagramm aus Fig. 2. Unter Berücksichtigung verschiedener Prioritäten (so muss "TAG_IN1 kleiner als 200°C" oder "TAG_IN2 größer als 50°C" in Klammern gefasst werden, damit es zuerst ausgeführt wird) und weiterer logischer Verknüpfungen findet so eine Formalisierung der natürlichen Sprachanforderung statt.

In einem nächsten Schritt werden alle gemäß der oben beschriebenen Syntax verknüpften Begrifflichkeiten und Textblöcke, die logische Verarbeitungsfunktionen beschreiben, d.h. Negationen ("nicht"), logische Verknüpfungen ("und", "oder",...), Zeitbedingungen ("seit", "vor", ...), Vergleiche ("größer als", "kleiner oder gleich als", ...) entsprechenden Funktionsblöcken mit einer vordefinierten Nummer und Position von Ein- und Ausgängen eines systemneutralen Funktionsplanes zugewiesen. Alle Anschlüsse auf der linken Seite eines Blocks und von unten werden dabei als Eingänge betrachtet und alle Anschlüsse rechts und von oben als Ausgänge.

Es kann somit ein Schema für einen natürlichsprachlichen Funktionsplan aufgebaut werden, in dem Begrifflichkeiten zur Logikvorgabe bzw. die entsprechende Funktionsblöcke platziert werden können, und zwar so, dass die geforderte Syntax erfüllt ist. Der Kern eines derartigen natürlichsprachlichen Funktionsplanes ist dabei eine Matrix mit beliebig vielen Zeilen und Spalten, wobei bestimmte Bereiche der Matrix vordefiniert sind, um bestimmte Terme der verbalen Formulierung einer Logik zu enthalten.

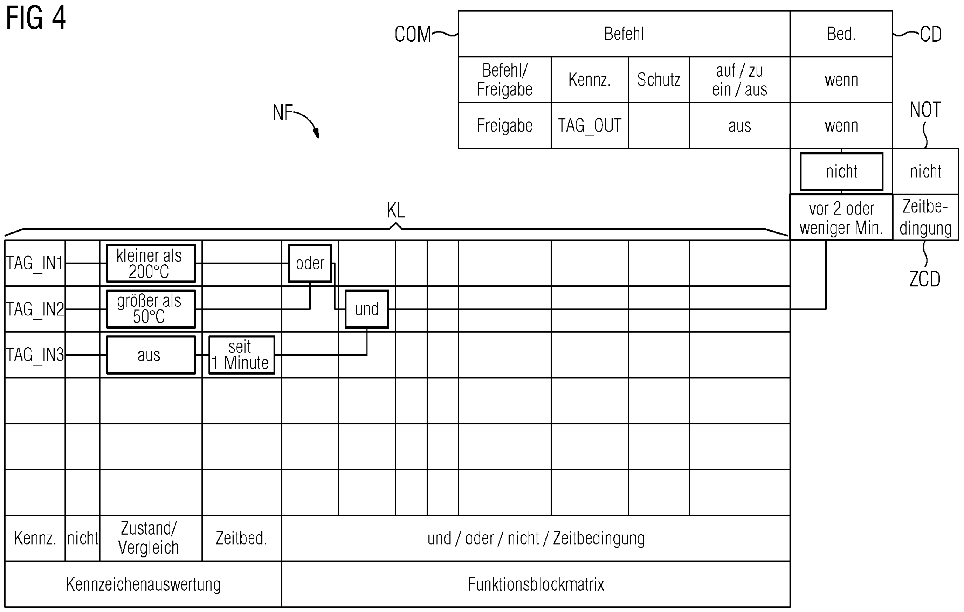

Ein Beispiel eines solchen natürlichsprachlichen Funktionsplans ist in Fig. 4 gezeigt. Ein Anwender kann eine Vorgabe für eine Verriegelungslogik dadurch erstellen, dass er diesen natürlichsprachlichen Funktionsplan, d.h. die Matrix, ausfüllt. Zu beachten ist hierbei, dass der Anwender lediglich die verbalen Ausdrücke bzw. Funktionsblöcke platzieren muss. Alle Verbindungslinien werden vom System gemäß der hinterlegten Syntax automatisch erzeugt. Der Anwender kann durch Verschieben von Blöcken in der Funktionsblockmatrix nach links und rechts unterschiedliche Logiken erzeugen. Je weiter links ein Funktionsblock platziert wird, mit desto höherer Priorität wird er berücksichtigt, d.h. in einer desto tieferen Klammerebene befindet er sich im verbalen Ausdruck. Je weiter rechts ein Funktionsblock platziert wird, mit desto niedrigerer Priorität wird er berücksichtigt, d.h. dass der Funktionsblock, der sich ganz rechts befindet, im verbalen Ausdruck nicht zwischen Klammern steht.

Das Beispiel aus Fig. 3 findet sich demnach im so genannten natürlichsprachlichen Funktionsplan aus Fig. 4 wieder. Letzterer visualisiert die logische Bedeutung der formalisierten Sprache in einer funktionalen Darstellung. Erfindungsgemäß wird nun basierend auf der formalisierten Sprache das zu realisierende Betriebsverhalten in den natürlichsprachlichen Funktionsplan eingetragen. In unserem Beispiel heißt das, dass der Anwender zunächst den Befehl "Freigabe TAG OUT aus" erfassen wird. Der Befehl ist an eine Bedingung CD geknüpft, die wiederum mit einer Negation NOT und Zeitbedingung ZCD "vor zwei oder weniger Minuten" zusammenhängt. An diese Blöcke schließt sich die Kernlogik KL an. Bei dieser sind gemäß der Kennzeichenauswertungen für die Komponenten TAG_IN1, TAG_IN2 und TAG_IN3 und gemäß deren Zuständen "kleiner als 200°C", "größer als 50°C" und "aus" die Verriegelungslogik erstellbar. So haben die Kennzeichenauswertungen für TAG_IN1 und TAG_IN2 eine höhere Priorität als die von TAG_IN2 und TAG_IN3. Der ODER-Block, der die Kennzeichenauswertungen für TAG_IN1 und TAG_IN2 verknüpft muss daher in der Matrix weiter links als der UND-Block, der die Kennzeichenauswertungen für TAG_IN2 und TAG_IN3 verknüpft, platziert werden. Zur Kontrolle kann der Satz, wie er sich ergibt, wenn der natürlichsprachliche Funktionsplan Zeile für Zeile von oben nach unten gelesen wird, ausgegeben werden. In diesem Satz findet sich der natürlichsprachliche Satz, der der Ausgangspukt des beschriebenen Beispiels war, wieder. Er lautet:
**Freigabe TAG_OUT aus wenn nicht vor 2 oder weniger Minuten TAG_IN1 kleiner als 200°C oder TAG_IN2 größer als 50°C und TAG_IN3 seit 1 Minute aus.**
Der in Fig. 4 gezeigte natürlichsprachliche Funktionsplan beschreibt demzufolge die in ihm enthaltene Logik formalisiert und gleichzeitig in natürlicher Sprache und wird deshalb als natürlichsprachlicher Funktionsplan bezeichnet. Die dem natürlichsprachlichen Funktionsplan zugrunde liegende Syntax ist in entsprechenden Algorithmen im natürlichsprachlichen Funktionsplan hinterlegt.

Ein erfindungsgemäßes System, das die Erstellung eines natürlichsprachlichen Funktionsplanes ermöglicht, benötigt mehrere Algorithmen, die sicherstellen, dass die dargestellte Logik der vorgegebenen Syntax entspricht, dass ein Ausdruck in natürlicher Sprache automatisch erstellt werden kann und dass ein technischer Funktionsplan bzw. die Automatisierungssoftware eines Automatisierungssystems automatisch generiert werden kann. Alle Algorithmen können in Form entsprechender Regelsätze formuliert werden. Die folgenden Regelsätze werden benötigt:

### Platzierungsregeln

Mit Hilfe der Platzierungsregeln stellt das System sicher, dass der Anwender Begrifflichkeiten und entsprechende Funktionsblöcke in der Matrix nur derart platzieren kann, dass die definierte Logik der vorgegebenen Syntax entsprechen und ein natürlichsprachlicher Satz aus der Logikvorgabe erzeugt werden kann.

### Verbindungsregeln

Unter Verwendung der Verbindungsregeln erzeugt das System automatisch die Verbindungslinien zwischen den vom Anwender platzierten Begrifflichkeiten und Funktionsblöcken. Der Anwender kann die Platzierung der Begrifflichkeiten und Funktionsblöcke so lange anpassen, bis die von ihm gewünschte Logik dargestellt ist.

### Klammerregeln

Der natürlichsprachliche Funktionsplan stellt die vorgegebene Logik auch bei umfangreichen Logiken mit vielen Eingangssignalen und Verknüpfungen auf übersichtliche Art und Weise dar. In bestimmten Fällen ist es jedoch vorteilhaft, den entsprechenden natürlichsprachlichen Satz sehen und prüfen zu können. Das erfindungsgemäße System kann daher in einer Ausführungsvariante z.B. unterhalb des natürlichsprachlichen Funktionsplanes in einem Editor den verbalen Satz, der die im Funktionsplan dargestellte Logik beschreibt, darstellen. Im natürlichsprachlichen Satz müssen zur vollen Korrektheit und Verständlichkeit zwingend die Klammerebenen dargestellt werden. Die Klammerregeln dienen dazu, bei der automatischen Erstellung des verbalen Satzes aus dem natürlichsprachlichen Funktionsplan die Klammern richtig zu setzen.

Der verbale Satz, der die Logik des Funktionsplanes wie er in Fig. 4 dargestellt ist, beschreibt, lautet bei Verwendung der Klammerregeln:
**Freigabe TAG_OUT aus wenn nicht vor 2 oder weniger Minuten (TAG_IN1 kleiner als 200°C oder TAG_IN2 größer als 50°C) und TAG_IN3 seit 1 Minute aus.**

### Umsetzunqsreqeln

Der natürlichsprachliche Funktionsplan ist bereits nahe einem technischen Funktionsplan eines Automatisierungssystems. Dennoch werden noch ein paar Regeln zur automatischen Generierung des Funktionsplanes für das Zielsystem benötigt. Hierzu gehört zum Beispiel, dass infolge einer Teillogik, die natürlichsprachlich als "Druck nicht größer als 10 bar" formuliert ist, anders als im natürlichsprachlichen Funktionsplan im technischen Funktionsplan das Drucksignal zunächst auf die Vergleichsstelle mit 10 bar und das Ergebnis dann auf die Negation geschaltet werden muss. Dies liegt daran, dass derartige Logiken in der natürlichen Sprache gerade umgekehrt als in der mathematischen Logik formuliert werden.

Es wird noch darauf hingewiesen, dass im natürlichsprachlichen Funktionsplan auch Funktionsblöcke verwendet werden können, die nicht unmittelbar einer natürlichsprachlichen Begrifflichkeit innerhalb einer Logikformulierung zugewiesen werden können. Beispiele für derartige Funktionsblöcke sind Speicherglieder wie z.B. Flip Flop, Zähler, Transistoren o.ä. Auch in diesem Falle kann das erfindungsgemäße System automatisch eine verbale Beschreibung der entsprechenden Logik erzeugen. Allerdings genügt dann nicht ein verbaler Satz zu Logikbeschreibung, sondern es müssen zwei oder mehr natürlichsprachliche Sätze generiert werden.

## Patentansprüche

1. Verfahren zur Projektierung einer Leittechnik einer verfahrenstechnischen Anlage,
deren verfahrenstechnischen Komponenten mittels der Leittechnik betrieben werden, indem eine Automatisierungssoftware Stellorgane der Komponenten gemäß eines vorgegebenen Betriebsverhaltens steuert oder regelt, wobei das Betriebsverhalten der Komponenten während der Projektierung anhand von Logiken festgelegt wird,
**dadurch gekennzeichnet,**
- **dass** eine natürliche Sprache, in der Anforderungen an das zu realisierende Betriebsverhalten vorgegeben werden, formalisiert wird, indem Begrifflichkeiten und eine Syntax definiert werden,
- **dass** basierend auf der formalisierten Sprache das zu realisierende Betriebsverhalten in einem natürlichsprachlichen Funktionsplan (NF), der die logische Bedeutung der formalisierten Sprache in einer funktionalen Darstellung visualisiert, erfasst wird, und
- **dass** mittels des natürlichsprachlichen Funktionsplans (NF) die Automatisierungssoftware für die zu projektierende Anlage erstellt wird.

2. Verfahren nach Anspruch 1,
**dadurch gekennzeichnet,**
**dass** die Syntax eine Kernlogik (KL) aufweist, die aus einer beliebig langen Kette aus logischen Auswertungen von Ausgangssignalen der Komponenten und logischen Verknüpfungen (LV) bestehen, wobei optional Teile der Kette in Klammern zur Priorisierung gefasst werden können.

3. Verfahren nach Anspruch 1 oder 2,
**dadurch gekennzeichnet,**
**dass** der natürlichsprachliche Funktionsplan erstellt wird, indem die in der Syntax enthaltenen Begrifflichkeiten Funktionsblöcken zugewiesen werden und die Funktionsblöcke in einer Matrixform angeordnet werden, wobei die Art der Anordnung einer Priorisierung innerhalb der Logik entspricht.

4. Verfahren nach Anspruch 3,
**dadurch gekennzeichnet,**
**dass** der natürlichsprachliche Funktionsplan mit logischen Funktionsblöcken ergänzt wird, die nicht aus den zuvor zugewiesenen Begrifflichkeiten bestehen.

5. Verfahren nach Anspruch 1, 2, oder 3,
**dadurch gekennzeichnet,**
**dass** der natürlichsprachliche Funktionsplan in Form von Regelsätzen formulierte Algorithmen umfasst, wobei die Algorithmen Platzierungsregeln, Verbindungsregeln, Klammerregeln und Umsetzungsregeln umfassen.

6. Verfahren nach einem der vorhergehenden Ansprüche, **dadurch gekennzeichnet,**
- **dass** mittels des natürlichsprachlichen Funktionsplans eine sprachliche Anweisung in Form eines Satzes generiert wird, der eine Logik beschreibt,
- **dass** anhand des natürlichsprachlichen Funktionsplans oder aus der sprachlichen Anweisung ein technischer Funktionsplan zur Definition von Logiken der Automatisierungstechnik erstellt wird, aus dem wiederum die Automatisierungssoftware für die zu projektierende Anlage erzeugt wird.

7. Verfahren nach Anspruch 6,
**dadurch gekennzeichnet,**
**dass** die sprachliche Anweisung, die aus dem natürlichsprachlichen Funktionsplan generiert wird, angezeigt wird.

8. Verfahren nach Anspruch 6 oder 7,
**dadurch gekennzeichnet,**
**dass** die Definition von Logiken der Automatisierungstechnik per Spracheingabe erfolgt und daraus ein natürlichsprachlicher Funktionsplan erstellt wird.

9. Verfahren nach einem der vorhergehenden Ansprüche,
**dadurch gekennzeichnet,**
**dass** das Betriebsverhalten der Anlage mittels Verriegelungslogiken (IL) oder Schutzlogiken oder Freigabelogiken formuliert wird.

10. System zur Projektierung einer Leittechnik einer verfahrenstechnischen Anlage, das derart ausgebildet ist, dass bei Eingabe bestimmter Vorgaben eines Betriebsverhaltens der verfahrenstechnischen Anlage in natürlicher Sprache automatisiert ein technischer Funktionsplan eines Automatisierungssystems ausgegeben wird, indem es die Verfahrensschritte nach einem der Ansprüche 1 bis 9 durchführt.

11. Computerprogramm mit durch einen Computer ausführbaren Programmcodeanweisungen zur Implementierung des Verfahrens nach einem der Ansprüche 1 bis 9, wenn das Computerprogramm auf einem Computer ausgeführt wird.

12. Computerprogrammprodukt, insbesondere Datenträger oder Speichermedium mit einem durch einen Computer ausführbaren Computerprogramm gemäß Anspruch 11.
